(19) Europäisches Patentamt
European Patent Office
Office européen des brevets

(11) EP 2 149 974 A2

(12) EUROPÄISCHE PATENTANMELDUNG

(43) Veröffentlichungstag:
03.02.2010 Patentblatt 2010/05

(51) Int Cl.:
*H02P 6/00* (2006.01)

(21) Anmeldenummer: 09003654.2

(22) Anmeldetag: 13.03.2009

(84) Benannte Vertragsstaaten:
AT BE BG CH CY CZ DE DK EE ES FI FR GB GR HR HU IE IS IT LI LT LU LV MC MK MT NL NO PL PT RO SE SI SK TR
Benannte Erstreckungsstaaten:
AL BA RS

(30) Priorität: 19.06.2008 DE 202008008563 U

(71) Anmelder: Ebm-Papst St. Georgen GmbH & CO. KG
78112 St. Georgen (DE)

(72) Erfinder:
• Karwath, Arno
78652 Deisslingen (DE)
• Nocita, Elvis
78713 Schremberg (DE)

(74) Vertreter: Raible, Tobias
Raible & Raible
Schoderstrasse 10
70192 Stuttgart (DE)

(54) **Elektromotor**

(57) Ein Elektromotor hat einen Gleichstrom-Zwischenkreis (30, 32), einen permanentmagnetischen Rotor (104), eine Ansteuerschaltung mit einer Vollbrücke (114), bei der in der einen Brückenhälfte, welche mit dem einen Pol des Gleichstrom-Zwischenkreises verbunden ist, Halbleiterschalter eines vorgegebenen Typs angeordnet sind, und in der anderen Brückenhälfte, die mit dem anderen Pol des Zwischenkreises verbunden ist, Halbleiterschalter eines anderen vorgegebenen Typs angeordnet sind. Durch die Vollbrücke (114) ist eine Statorwicklungsanordnung (106) steuerbar, und hierzu dient eine programmgesteuerte Rechenanordnung (80), die dazu ausgebildet ist, die Halbleiterschalter der einen Brückenhälfte mit einem PWM-Signal (136, 136') und die Halbleiterschalter (118, 122) der anderen Brückenhälfte mit einem Kommutierungssignal (01, 02; 150, 150') zur Kommutierung dieser Halbleiterschalter zu versorgen.

Zur Stromversorgung der Rechenanordnung (80) dient eine Stromversorgungseinrichtung (52) welche durch eine Diodenanordnung (42, 55) von der Stromversorgung des Motors (102) getrennt ist, so dass bei Stromausfall die Rechenanordnung (80) unabhängig vom Motor (102) deaktivierbar ist und dann keine Signale mehr an die Halbleiterschalter der Vollbrücke (114) liefert. Den Halbleiterschaltern (118, 122) der anderen Brückenhälfte ist mindestens ein Energiespeicher (170) zugeordnet, welcher im Normalbetrieb des Motors (102) aus dem Zwischenkreis (30, 32) aufladbar ist und bei Wegfall der Signale von der Rechenanordnung (80) dazu dient, die Halbleiterschalter (118, 122) der anderen Brückenhälfte leitend zu machen und dadurch die Statorwicklungsanordnung (106) über diese Halbleiterschalter (118, 122) im Kurzschluss zu betreiben, um den permanentmagnetischen Rotor (104) abzubremsen.

FIG. 3

EP 2 149 974 A2

**Beschreibung**

Die Erfindung betrifft einen elektronisch kommutierten Elektromotor, wie er vor allem zum Antrieb von Lüftern verwendet wird. Solche Lüfter werden u. a. zur Kühlung von Schaltschränken verwendet. Wenn ein solcher Schaltschrank geöffnet wird, werden zwar die Lüfter automatisch abgeschaltet, rotieren aber noch eine Zeitlang, und es besteht deshalb die Gefahr, dass jemand mit der Hand den laufenden Rotor eines solchen Lüfters berührt. Es ist deshalb wichtig, dass ein solcher Lüfter, sobald er - aus welchen Gründen auch immer - stromlos wird, automatisch sehr schnell abgebremst wird, um die Gefahr einer Verletzung zu minimieren.

Es ist deshalb eine Aufgabe der Erfindung, einen neuen Elektromotor bereit zu stellen.

Nach der Erfindung wird diese Aufgabe gelöst durch einen Elektromotor nach Anspruch 1. Wenn eine solcher Motor abgeschaltet wird, wird die Energie, die zur Speisung der Recheneinrichtung dient, praktisch augenblicklich verbraucht, so dass die Recheneinrichtung keine Signale mehr an die MOSFETs liefern kann, wodurch automatisch eine Kurzschlussbremsung aktiviert wird.

Sehr vorteilhaft ist dabei Folgendes: Wenn ein solcher Motor im abgeschalteten Zustand durch Luftströmungen angetrieben wird, welche den Rotor eines Lüfters in Drehung versetzen, wirkt der Motor als Generator und erzeugt eine Spannung am Zwischenkreis, welche den dort vorgesehenen Speicher auflädt. Da die programmgesteuerte Recheneinrichtung in diesem Fall weiterhin deaktiviert ist, wird automatisch die Kurzschlussbremsung auch in einem solchen Fall eingeschaltet, so dass z. B. ein Lüfter, der von einem solchen Motor angetrieben wird, keine hohen Drehzahlen erreichen kann. Dies ist dann besonders vorteilhaft, wenn ein solcher Lüfter durch diese Luftströmung in der "falschen" Drehrichtung angetrieben wird. Z. B. wurde bei einem Versuch ein Lüfter durch eine solche Luftströmung in der falschen Drehrichtung mit 3500 U/min angetrieben, wenn die Kurzschlussbremsung nicht aktiviert war, und bei aktivierter Kurzschlussbremsung wurde diese Drehzahl - ohne elektrische Energiezufuhr von außen - auf 500 U/min reduziert.

Dies erleichtert in einem solchen Fall den Anlauf in der richtigen Richtung, weil der Motor zuerst nur von 500 (und nicht von 3500!) U/min auf 0 U/min abgebremst und dann z. B. auf die Nenndrehzahl von 6000 U/min beschleunigt werden muss.

Man erhält also einen Lüfter, der sich ohne Spannungsversorgung selbst elektrisch bremst, bzw. der verhindert, dass er durch unkontrollierbare Luftströmungen hohe Drehzahlen erreicht, die z. B. einen Wartungsingenieur verletzen könnten.

Weitere Einzelheiten und vorteilhafte Weiterbildungen der Erfindung ergeben sich aus dem im Folgenden beschriebenen und in der Zeichnung dargestellten, in keiner Weise als Einschränkung der Erfindung zu verstehenden Ausführungsbeispiel, sowie aus den Unteransprüchen. Es zeigt:

Fig. 1    ein Schaltbild, welches den Anschluss eines Elektromotors an eine elektrische Energiequelle zeigt,

Fig. 2    die Grundschaltung einer programmgesteuerten Recheneinrichtung, hier eines µC vom Typ PIC16F684 der Firma Microchip in Arizona, USA,

Fig. 3    den Aufbau eines elektronisch kommutierten Elektromotors mit automatischer Bremsung bei Stromausfall und mit einer H-Brücke,

Fig. 4    eine vergrößerte Darstellung einer Einzelheit aus Fig. 3, und

Fig. 5    den Aufbau eines elektronisch kommutierten Elektromotors mit automatischer Bremsung bei Stromausfall und mit einer Dreiphasen-Vollbrücke.

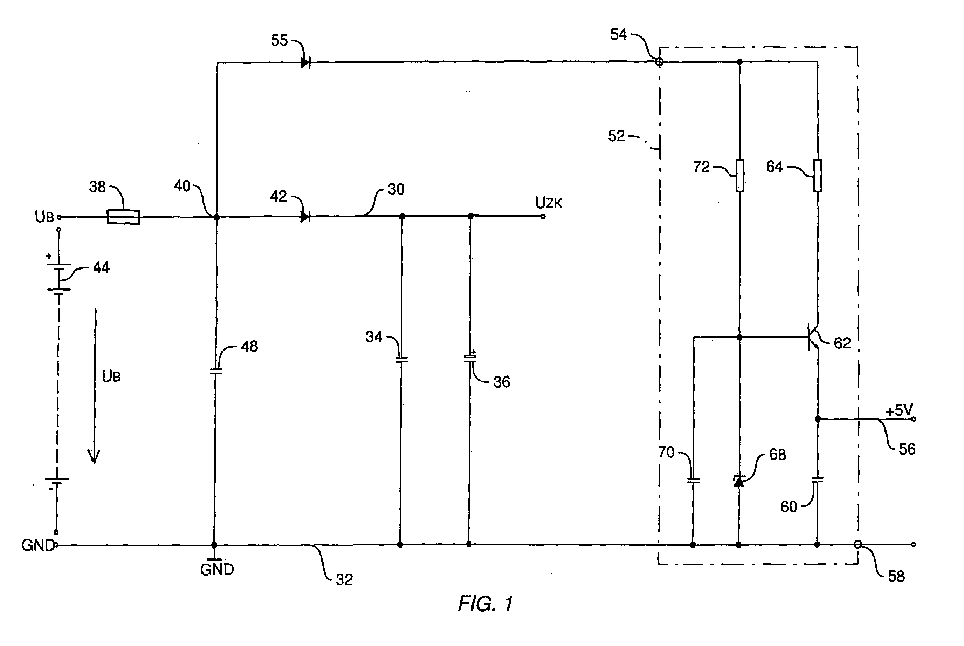

**Fig. 1** zeigt den positiven Zweig 30 eines Gleichstrom-Zwischenkreises, zwischen dem und Masse 32 im Betrieb eine Spannung Uzk liegt. Bei einem Lüfter liegt diese Spannung häufig in einem Bereich zwischen 8 und 100 V Gleichspannung, kann aber auch höher oder niedriger sein.

Manche Motoren können in einem relativ großen Spannungsbereich betrieben werden, z. B. zwischen 20 V und 80 V Gleichspannung. Zwischen dem positiven Zweig 30 und Masse 32 liegt ein Kondensator 34 zum Ausfiltern hochfrequenter Störungen, und ein sog. Zwischenkreiskondensator 36 mit einer höheren Kapazität, gewöhnlich ein Elektrolytkondensator.

Über eine Sicherung 38, einen Knotenpunkt 40 und eine Diode 42 kann die Leitung 30 an eine externe Betriebsspannung $U_B$ angeschlossen werden, die hier symbolisch als Batterie 44 dargestellt ist, z. B. als Amtsbatterie eines Telefonamts. Zwischen dem Knotenpunkt 40 und Masse 32 liegt ein Kondensator 48, der zum Ausfiltern von Störungen dient.

Fig. 1 zeigt auch eine Schaltung 52, deren positiver Eingang 54 über eine Diode 55 an den Knotenpunkt 40 angeschlossen ist und die zwischen ihren Ausgängen 56 (+) und 58 (Masse) eine geregelte Gleichspannung erzeugt.

Zwischen den Ausgängen 56, 58 liegt ein Kondensator 60, der in Serie mit einem npn-Regeltransistor 62 und einem Widerstand 64 an den Eingang 54 angeschlossen ist. Die Basis des Transistors 62 ist über die Parallelschaltung einer Zenerdiode 68 und eines Kondensators 70 mit Masse 32 verbunden, und sie ist über einen Widerstand 72 mit dem Eingang 54 verbunden.

Das Netzgerät 52 erzeugt unabhängig von der augenblicklichen Spannung am Knotenpunkt 40 eine geregelte Gleichspannung von 5 V zwischen seinen Ausgängen 56, 58. Seine Arbeitsweise ist bekannt und wird deshalb nicht beschrieben. Die Dioden 42, 55 verhindern, dass bei einem falschen Anschluss der Motor zerstört wird. Man bezeichnet sie als "Falschpoldioden" oder "Verpolschutzdioden".

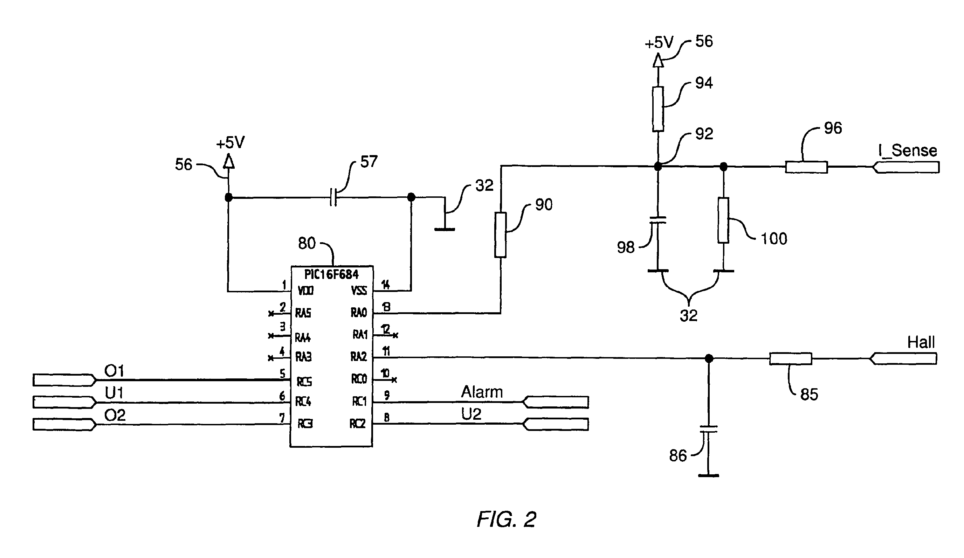

**Fig. 2** zeigt die Schaltung einer geeigneten programmgesteuerten Recheneinrichtung, hier eines μC 80 vom Typ PIC16F684 der Firma Microchip in Arizona, USA. Dieser erhält vom Ausgang 56 (Fig. 1) an seinem Eingang 1 die geregelte Betriebsspannung von + 5 V. Sein Eingang 14 (Vss) ist an Masse 32 angeschlossen. Zwischen dem Eingang 1 und Masse 32 liegt ein Kondensator 57.

Der dargestellte μC 32 hat vierzehn Anschlüsse wie folgt:

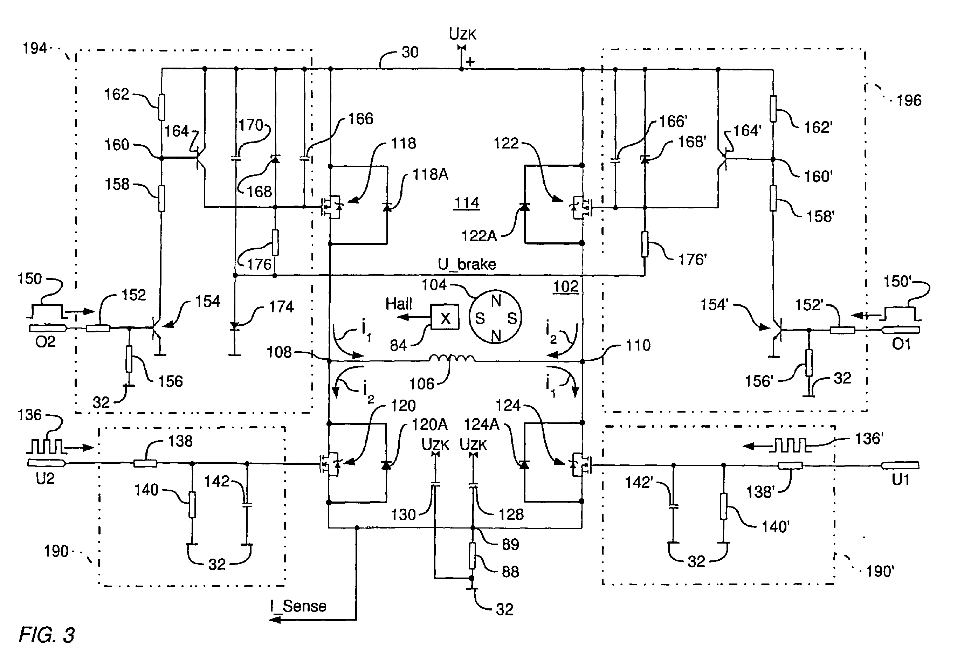

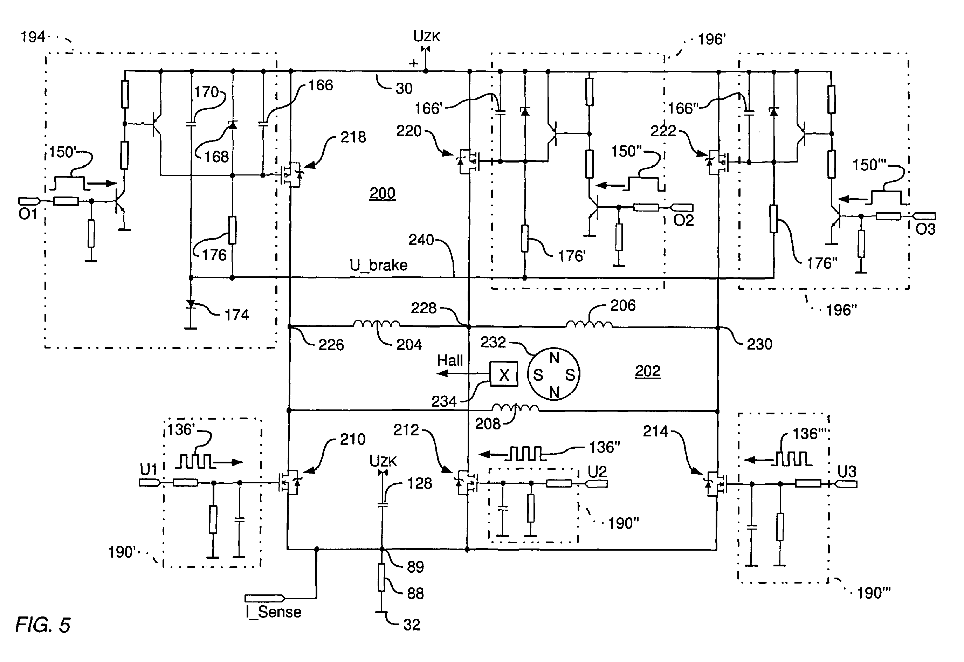

1   V00 (geregelte Spannung + 5 V)
2   RA5 (nicht beschaltet)
3   RA4 (nicht beschaltet)
4   RA3 (nicht beschaltet)
5   RC5 An ihm wird ein Signal O1 erzeugt
6   RC4 An ihm wird ein Signal U1 erzeugt
7   RC3 An ihm wird ein Signal O2 erzeugt
8   RC2 An ihm wird ein Signal U2 erzeugt
9   RC1 An ihm kann ein Signal "Alarm" erzeugt werden, wenn bestimmte Bedingungen vorliegen.
10  RC0 (nicht beschaltet)
11  RA2 Diesem Eingang wird von einem Hallsensor 84 (Fig. 3 und 5) über einen Widerstand 85 ein Drehstellungssignal "Hall" zugeführt, das zur Steuerung der Kommutierung des Motors dient. Ein Kondensator 86 dient zur Siebung dieses Signals.
12  RA1 (nicht beschaltet)
13  DATA Diesem Eingang können analoge Signale zugeführt werden, die digitalisiert werden sollen, z. B. wie dargestellt ein Signal I_Sense, das ein Maß für die Größe des Motorstroms i_mot in einem Messwiderstand 88 (Fig. 3 bis 5) ist und zur Begrenzung von i_mot auf einen gewünschten Wert dient.
14  Vss Masseanschluss

Der Anschluss 13 ist über einen Widerstand 90 mit einem Knotenpunkt 92 verbunden. Dieser ist über einen Widerstand 94 mit dem Anschluss 56 (+ 5 V) verbunden, ferner über einen Widerstand 96 mit dem oberen Anschluss 89 des Messwiderstands 88, und über einen Kondensator 98 und einen Widerstand 100 mit Masse 32.

Die Elemente 90, 94, 96, 100 dienen dazu, das Signal I_Sense in einen vorgegebenen Spannungsbereich zu verschieben, der vom A/D-Wandler des μC 80 digitalisiert werden kann, um bei allen Strömen i_mot eine Strombegrenzung zu ermöglichen.

**Fig. 3** zeigt ein Übersichts-Schaltbild einer bevorzugten Ausführungsform des ECM-Motors 102. Dieser hat einen permanentmagnetischen Rotor 104, der hier nur ganz schematisch und mit vier Rotorpolen dargestellt ist, aber naturgemäß auch andere Polzahlen haben kann. Der Rotormagnet 104 steuert den Hallsensor 84, der ebenfalls nur sehr schematisch dargestellt ist.

Ferner hat der Motor 102 bei diesem Beispiel nur einen einzigen Wicklungsstrang 106, der zwischen zwei Knotenpunkten 108, 110 angeordnet ist. Im Betrieb fließt ein ständiger Wechselstrom i1 vom Knotenpunkt 108 zum Knotenpunkt 110, und dann ein Strom i2 vom Knotenpunkt 110 zum Knotenpunkt 108.

Zum Steuern der Ströme i1, i2 dient eine sog. H-Brücke 114, in deren Diagonalen, wie dargestellt, der Wicklungsstrang 106 angeordnet ist. Die Brücke 114 ist hier eine Vollbrücke, und der Knotenpunkt 108 ist über einen p-Kanal-MOSFET 118 mit dem Zwischenkreis 30 und über einen n-Kanal-MOSFET 120 mit dem Knotenpunkt 89 verbunden. Ebenso ist der Knotenpunkt 110 über einen p-Kanal-MOSFET 122 mit dem Zwischenkreis 30 und über einen n-Kanal-MOSFET 124 mit dem Knotenpunkt 89 verbunden.

Parallel zu den MOSFETs 118, 120, 122, 124 liegt jeweils eine Freilaufdiode 118A, 120A, 122A, 124A.

Zwischen dem Knotenpunkt 89 und der Zwischenkreisleitung 30 liegt ein Siebkondensator 128, z. B. 3,3 nF, und zwischen Masse 32 und der Leitung 30 liegt ein Siebkondensator 130, z. B. 100 nF.

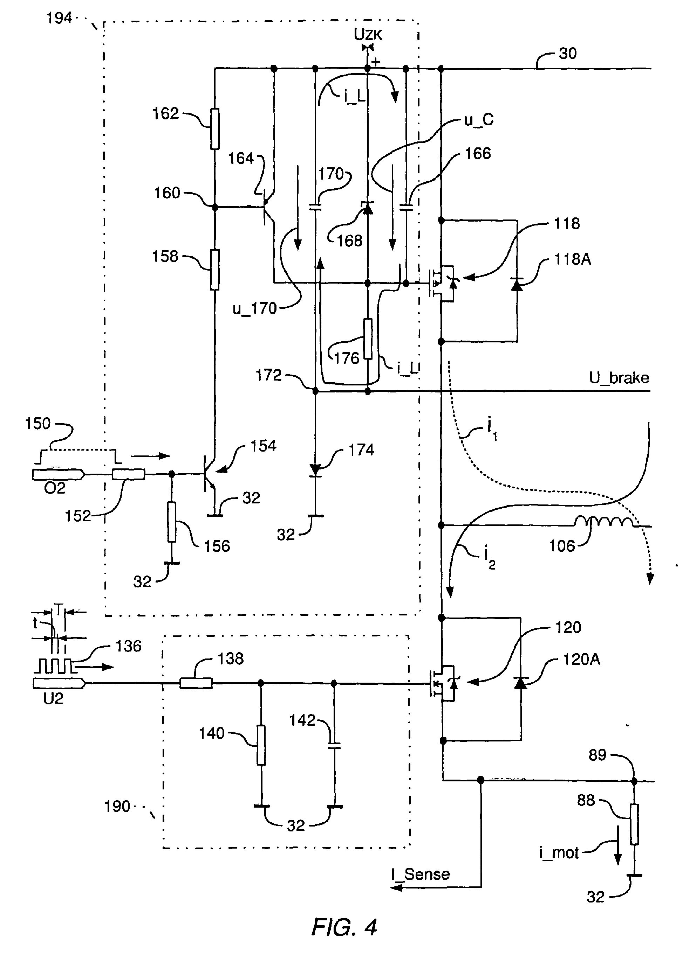

Wie man Fig. 3 entnimmt, ist der dort dargestellte Motor 102 einschließlich seiner Elektronik weitestgehend symmetrisch ausgebildet. Deshalb wird im Folgenden nur seine linke Hälfte beschrieben, die in Fig. 4 in vergrößertem Maßstab dargestellt ist.

Bei Fig. 3 und 4 ist darauf hinzuweisen, dass im normalen Betrieb in Fig. 3 entweder der p-Kanal-MOSFET 118 und der n-Kanal-MOSFET 124 zusammen eingeschaltet werden, oder aber der MOSFET 122 und der MOSFET 120. Dabei wird jeweils der untere MOSFET, also entweder 120 oder 124, durch ein PWM-Signal 136 (Fig. 4) ein- und ausgeschaltet, gewöhnlich, um die Drehzahl des Motors 102 auf einen vorgegebenen Wert zu regeln. Alternativ ist z. B. auch eine Regelung des Stromes im Motor 102 auf einen vorgegebenen Wert möglich, um ein konstantes Drehmoment zu erhalten.

Die unteren FETs sind bevorzugt so ausgewählt, dass sie direkt vom μC 80 angesteuert werden können, z.B. vom Typ IRLR3410. Man bezeichnet sich auch als Logic Level FETs. Sie können niederohmig und schnell angesteuert werden, was wichtig ist, da die Frequenz der PWM-Signale meist über 16 kHz liegt. Dagegen können die oberen FETs 118, 122 langsam geschaltet werden, was ein fast energieloses Bremsen ermöglicht.

Das PWM-Signal 136 hat eine - bevorzugt konstante - Frequenz in einem Bereich, der für ältere Menschen nicht mehr hörbar ist, meistens im Bereich 16 kHz bis 25 kHz. Die Drehzahlregelung erfolgt durch eine Veränderung des Tastverhältnisses pwm, wobei in Fig. 4 gilt:

$$pwm = t/T * 100\ \% \qquad\qquad\qquad ...\ (1),$$

d. h. wenn z.B. der Strom i1 oder i2 ständig fließt, gilt pwm = 100 %, und wenn er gar nicht fließt, ist pwm = 0 %.

Das Signal 136, das in Fig. 2 und 4 mit U2 bezeichnet ist, wird vom μC 80 erzeugt, der einen PWM-Generator enthält. Es wird über einen Widerstand 138 dem Gate G des MOSFETs 120 zugeführt. Zwischen diesem Gate G und Masse 32 liegen ein Widerstand 140 und ein kleiner Kondensator 142, z. B 1 nF.

Wenn das Signal 136 (U2) den Wert 0 V hat, ist der MOSFET 120 gesperrt, und wenn das Signal 136 positiv ist, leitet der MOSFET 120.

Durch das Tastverhältnis pwm wird der Strom i_mot beeinflusst, d. h. wenn pwm = 0 % ist, gilt i_mot = 0, und bei pwm = 100 % gilt i_mot = max.

Durch den Messwert I_Sense wird verhindert, dass i_mot einen vorgegebenen oberen Grenzwert überschreitet, d. h. in diesem Fall wird der augenblicklich leitende MOSFET 120 oder 124 kurzzeitig gesperrt. Ebenso sperren die MOSFETs 120 und 124 sofort, wenn das Netzteil 52 (Fig. 1) keine Ausgangsspannung mehr erzeugt.

Die Source S des oberen MOSFETs 118 in Fig. 4 liegt auf dem Potenzial der Leitung 30, das z. B. + 48 V oder + 80 V beträgt, und die Ansteuerung des MOSFET 118 und des MOSFET 122 erfordert deshalb ein Potenzial in der gleichen Größenordnung.

Zur Ansteuerung des MOSFET 118 dient ein Kommutierungssignal 150, das vom Ausgang O2 des μC 80 geliefert und über einen Widerstand 152 der Basis eines npn-Transistors 154 zugeführt wird. Die Basis des Transistors 154 ist über einen Widerstand 156 mit Masse verbunden, ebenso sein Emitter.

Der Kollektor des Transistors 154 ist über einen Widerstand 158, einen Knotenpunkt 160 und einen Widerstand 162 mit der Leitung 30 verbunden.

Der Knotenpunkt 160 ist mit der Basis eines pnp-Transistors 164 verbunden, dessen Emitter mit der Leitung 30 und dessen Kollektor mit dem Gate G des MOSFET 118 verbunden ist. Ein Kondensator 166 liegt zwischen Gate G und Source S des MOSFET 118. Die Spannung am Kondensator 166 wird durch eine Zenerdiode 168 begrenzt, z. B. auf 13 V. Die Zenerdiode 168 liegt parallel zum Kondensator 166. Liegt die Spannung u_C am Kondensator 166 unter der Zenerspannung der Diode 168, so ist letztere sehr hochohmig und entlädt den Kondensator 166 nur mit Strömen in der Größenordnung von μA, d.h. sie hat auf den Ladezustand des Kondensators 166 (oder 166') dann keinen Einfluss mehr.

Zur Energiespeicherung ist ein Kondensator 170 vorgesehen, der im vorliegenden Fall beiden oberen MOSFETS 118, 122 gemeinsam zugeordnet ist. Dieser liegt in Reihe mit einem Knotenpunkt 172 und einer Diode 174 zwischen den Leitungen 30 und 32, so dass er im Betrieb auf eine Spannung u_170 aufgeladen wird, die etwa der Spannung Uzk entspricht.

Gleichzeitig fließt, solange der Transistor 164 nicht leitend ist, vom Kondensator 170 über den Widerstand 176 ein Ladestrom i_L zum Kondensator 166 und hält dessen Ladespannung u_C auf dem Wert der Zenerspannung der Zenerdiode 168, also z. B. auf 13 V, so dass der MOSFET 118 durch u_C in diesem Fall leitend gesteuert wird.

Da beim Fehlen einer Spannung am Ausgang 56, 58 des Netzteils 52 der μC 80 deaktiviert ist und deshalb an seinen Ausgängen keine Signale mehr erzeugen kann, haben in diesem Fall die Signale 136 und 150 (Fig. 4) den Wert Null.

Das bewirkt, dass der npn-Transistor 154 (Fig. 4) sperrt, wodurch auch der Transistor 164 gesperrt wird, da er keinen Basisstrom mehr erhält, so dass der Transistor 164 den Kondensator 166 nicht mehr kurzschließen kann und folglich die Spannung u_C ansteigt, weil der Ladestrom i_L vom Kondensator 170 (mit der höheren Ladespannung u_170) zum Kondensator 166 fließt und diesen auf eine Spannung u_C auflädt, die der Zenerspannung der Z-Diode 168 entspricht und z. B. etwa 13 V beträgt.

Dadurch wird bei Wegfall der Netzspannung UB (Fig. 1) der obere MOSFET 118 automatisch leitend gehalten, ebenso der MOSFET 122 (Fig. 3) auf der rechten Seite der Vollbrücke 114, so dass der Wicklungsstrang 106 durch die beiden oberen MOSFETs 118, 122 kurzgeschlossen wird und den Rotor 104 rasch abbremst.

Dieser Zustand dauert so lange an, wie die im Kondensator 170 gespeicherte Energie ausreicht, um mittels des Ladestroms i_L die Spannung u_C am Kondensator 166 genügend hoch zu halten, um den MOSFET 118, und ebenso den MOSFET 122 auf der rechten Seite der Vollbrücke 114, leitend zu halten, wobei der Rotor 104 durch Kurzschlussbremsung rasch, z. B. innerhalb von 2 Sekunden, auf eine niedrige Drehzahl abgebremst wird.

Solange der Kondensator 166 ausreichend geladen ist, liegt also das Potenzial des Gate G um etwa 13 V unter dem Potenzial Uzk an der Leitung 30, sofern der Transistor 164 durch den Netzausfall nichtleitend ist.

Wird im Normalbetrieb der Transistor 154 durch ein Kommutierungssignal 150 leitend gesteuert, so wird das Potenzial des Knotenpunkts 160 tiefer, wodurch der Transistor 164 leitend wird und den Kondensator 166 kurzschließt, so dass der MOSFET 118 sperrt. In diesem Fall fließt der Strom i_L über den Transistor 164. Die MOSFETs 118, 122 werden also gesperrt, wenn das zugeordnete Signal 150 oder 150' positiv ist, und sie leiten, wenn dieses Signal den Wert 0 V hat.

Dies bedeutet ferner, dass dann, wenn der μC 80 deaktiviert ist, weil er vom Netzgerät 52 keine Betriebsspannung mehr erhält, der Kondensator 166 über den Widerstand 176 mittels des Ladestroms i_L vom Kondensator 170 her aufgeladen wird und dadurch den MOSFET 118 leitend macht.

Das gleiche geschieht beim MOSFET 122 (Fig. 3), bei dem sich der Kondensator 166' auflädt, so dass auch der MOSFET 122 leitend wird, wenn das Netzgerät 52 an seinen Ausgängen 56, 58 dem μC 80 keine Betriebsspannung mehr liefert.

In diesem Fall wird also der Wicklungsstrang 106 durch die beiden MOSFETs 118, 122 kurzgeschlossen, so dass der Rotor 104 durch diese Kurzschlussbremsung rasch auf eine niedrige Drehzahl abgebremst wird, z. B. bei einem üblichen Gerätelüfter innerhalb von zwei Sekunden.

Diese Bremsung tritt auch automatisch ein, wenn bei einem Lüfter der Rotor 104 durch den Wind wie eine Windmühle angetrieben wird und rückwärts läuft, z. B. mit einer Drehzahl von 3500 U/min. In diesem Fall induziert der Rotor 104 in der Wicklung 106 eine Spannung, die über die Dioden 118A, 120A, 122A , 124A den Kondensator 170 entsprechend auflädt, so dass man am Knotenpunkt 172 die Spannung U_brake erhält, die ausreicht, um die beiden MOSFETs 118, 122 leitend zu machen und dadurch den Rotor 104 ständig zu bremsen, z. B. von 3500 auf 500 U/min, was den Anlauf wesentlich erleichtert.

In diesem Fall verhindert die Diode 42, dass vom Zwischenkreis 30 ein Strom zum Netzteil 52 fließt und den μC 80 speist, d. h. die Spannung Uzk am Zwischenkreis 30 speist nur den Kondensator 170 und erhöht dadurch die Spannung u_170, so dass die Spannung u_C genügend groß werden kann, um die beiden oberen MOSFETs 118, 122 leitend zu machen und den Motor 102, entgegen der Kraft des Windes, auf eine niedrige Drehzahl abzubremsen. Dies stellt ein wichtiges Sicherheitsmerkmal dar.

Naturgemäß kann dasselbe Prinzip auch analog bei anderen Vollbrückenschaltungen verwendet werden, z. B. bei Vollbrückenschaltungen für einen dreiphasigen Motor, denn dort erhält man die gleichen Probleme. Dies zeigt Fig. 5.

Auch können anstelle von MOSFETs andere Halbleiterschalter mit ähnlicher Wirkung verwendet werden. Auch sonstige Abwandlungen und Modifikationen sind im Rahmen der vorliegenden Erfindung ohne weiteres möglich.

Beispielhafte Werte einiger Bauelemente für Lüftermotor 48 V (k = kOhm)

| Fig. 1 | |
| --- | --- |
| C70 | 10 nF |
| C60, 57 | 33 nF |
| C34 | 100 nF |
| C36 | 39 μF, 100 V |
| Fig. 2 | |
| μC80 | PIC16F684 |
| Fig. 3, 4 | |
| T118, 122 | IRFR5410 (p-Kanal) |
| T120, 124 | IRLR3410 (n-Kanal) |

(fortgesetzt)

Fig. 3, 4

| | |
|---|---|
| R152, 152', 162, 162', 156, 156' | 10 k |
| R158, 158' | 62 k |
| T154, 154' | BC846B |
| T164, 164' | BC857B |
| C166, 166' | 1 nF |
| C170 | 100 nF |
| D174 | BAS316 |
| R176, 176' | 10 k |
| Z-Diode 168, 168' | BZT52C13 (13 V) |

Die vorstehenden Werte wurden bei einem Versuchsmotor verwendet. Die FETs 120, 124 sind für direkte Ansteuerung durch einen µC ausgelegt, der nur eine niedrige Steuerspannung, z.B. 3,3 V oder 5 V, liefern kann. Solche FETs haben eine niedrige Einschaltschwelle, z.B. 1 bis 2 Volt.

Wie Fig. 3 zeigt, verwendet die Schaltung für die Steuerung der H-Brücke 114 insgesamt vier Module.

Zur Steuerung der unteren FETs 120, 124 dient links ein Modul 190, über das dem FET 120 die PWM-Impulse 136 zugeführt werden, und rechts ein Modul 190', über das dem FET 124 die PWM-Impulse 136' zugeführt werden. Die Module 190 und 190' sind identisch.

Zur Steuerung des linken oberen FETs 119 dient ein Modul 194, das auch den Kondensator 170 für die Energiespeicherung enthält. Dieses Modul 194 wurde bei Fig. 4 ausführlich beschrieben.

Zur Steuerung des rechten oberen FETs 122 dient ein Modul 196, das mit dem Modul 194 weitgehend identisch ist, bei dem aber der Kondensator 170 und die Diode 174 nicht vorgesehen sind. Diese beiden Bauteile werden von den oberen Modulen 194, 196 gemeinsam benutzt, könnten aber auch für jedes der Module 194, 196 separat vorgesehen werden.

Mit den beschriebenen Modulen kann auch eine Dreiphasen-Vollbrückenschaltung 200 aufgebaut werden, die in Fig. 5 dargestellt ist. Gleiche oder gleich wirkende Teile wie in den vorhergehenden Figuren werden mit den gleichen Bezugszeichen bezeichnet wie dort und gewöhnlich nicht nochmals beschrieben.

Die Schaltung 200 dient zum Betrieb eines Motors 202, dessen drei Stränge 204, 206, 208 in Dreieckschaltung dargestellt sind. Naturgemäß ist mutatis mutandis auch eine Sternschaltung möglich.

Die Schaltung 200 hat unten drei n-Kanal-MOSFETs 210, 212, 214, deren Source S jeweils mit dem Knotenpunkt 89 verbunden ist.

Oben hat die Schaltung 200 drei p-Kanal-MOSFETs 218, 220, 222, bei denen die Source S jeweils mit dem Pluspol 30 des Gleichstrom-Zwischenkreises 30, 32 verbunden ist.

Die Drains D der FETs 210, 218 sind mit einem Knotenpunkt 226 verbunden. Die Drains D der FETs 212, 220 sind mit einem Knotenpunkt 228 verbunden. Die Drains D der FETs 214, 222 sind mit einem Knotenpunkt 230 verbunden.

Der Strang 204 ist zwischen den Knotenpunkten 226 und 228 angeschlossen.

Der Strang 206 ist zwischen den Knotenpunkten 228 und 230 angeschlossen.

Der Strang 208 ist zwischen den Knotenpunkten 226 und 230 angeschlossen.

Der Motor 202 hat einen permanentmagnetischen Rotor 232, der hier nur ganz schematisch als vierpoliger Rotor dargestellt ist und je nach Bauart eine unterschiedliche Form und unterschiedliche Polzahlen haben kann, z.B. Innenrotor, Außenrotor, Flachrotor etc. Er steuert einen Hallsensor 234, dessen Ausgangssignal Hall gemäß Fig. 2 dem Eingang RA2 des µC 80 zugeführt wird. Letzterer liefert außer den vier Ausgangssignalen O1, U1, O2, U2 noch zwei weitere Ausgangssignale 03 (150''') und U3 (136'''), z.B. an seinen Ausgängen RA3, RA4, was von der Programmierung des µC abhängt.

Zur Ansteuerung der unteren FETs 210, 212, 214 dienen drei identische Module 190', 190'', 190''', die mit den Modulen 190, 190' der Fig. 3 identisch sind und deshalb nicht nochmals beschrieben werden. Über sie werden die PWM-Signale 136', 136'', 136''' den unteren FETs 210, 212, 214 zugeführt.

Der linke obere FET 218 wird über ein Modul 194 gesteuert, das mit dem Modul 194 der Fig. 3 und 4 identisch ist und deshalb nicht nochmals beschrieben wird. Es enthält den Speicherkondensator 170, der über eine Leitung 240 (U_brake) auch die Module 196' und 196'' speist, welche mit dem Modul 196 der Fig. 3 identisch sind und deshalb nicht nochmals beschrieben werden. Über das Modul 196' wird der obere FET 220 gesteuert, und über das Modul 196'' der FET 222.

**Wirkungsweise von Fig. 5**

Bei Spannungsausfall wird der µC 80 sehr schnell stromlos und liefert weder die PWM-Impulse 136', 136", 136'" noch die Kommutierungsimpulse 150', 150", 150'", so dass die sechs FETs 210, 212, 214, 218, 220, 222 keine Signale mehr vom µC 80 erhalten und deshalb sperren.

Im Augenblick des Stromausfalls ist der Kondensator 170 geladen, und er lädt über die Widerstände 176, 176', 176" die Kondensatoren 166, 166', 166" auf, so dass zwar die unteren FETs 210, 212, 214 nichtleitend werden; aber die oberen FETs 218, 220, 222 werden automatisch leitend und bewirken einen Kurzschluss der drei Stränge 204, 206, 208, so dass der Motor 202 durch Kurzschlussbremsung automatisch stark abgebremst wird und rasch zum Stillstand kommt.

Besonders vorteilhaft ist, dass die Kombination des Speicherkondensators 170 und der drei Kondensatoren 166, 166', 166" auch zur Steuerung der Kommutierung verwendet wird. Dies ermöglicht eine sanfte Steuerung der Kommutierung, da die Vorgänge des Einschaltens und Ausschaltens je nach den Bedürfnissen verändert werden können.

Die unteren FETs 210, 212, 214 sind bevorzugt vom Typ IRLR3410, also mit niedrigen Potenzialen steuerbar, und die oberen FETs 218, 220, 222 sind bevorzugt vom Typ IRFR5410.

Naturgemäß sind im Rahmen der vorliegenden Erfindung vielfache Abwandlungen und Modifikationen möglich.

**Patentansprüche**

1. Elektromotor zum Anschluss an eine Gleichstromquelle (44), welcher Motor (102) aufweist:

   Einen Gleichstrom-Zwischenkreis (30, 32);
   einen permanentmagnetischen Rotor (104; 232);
   eine Ansteuerschaltung mit einer Vollbrücke (114; 200), bei der in der einen Brückenhälfte, die mit dem einen Pol des Gleichstrom-Zwischenkreises (30, 32) verbunden ist, Halbleiterschalter eines vorgegebenen Typs angeordnet sind,
   und in der anderen Brückenhälfte, die mit dem anderen Pol des Zwischenkreises verbunden ist, Halbleiterschalter eines anderen vorgegebenen Typs angeordnet sind;
   einen Stator mit einer Statorwicklungsanordnung (106; 204, 206, 208), deren Bestromung durch die Vollbrücke (114; 200) steuerbar ist;
   eine programmgesteuerte Rechenanordnung (80) zur Ansteuerung der Vollbrücke (114; 200), welche Rechenanordnung (80) dazu ausgebildet ist, die Halbleiterschalter (120, 124; 210, 212, 214) der einen Brückenhälfte mit einem PWM-Signal (136, 136', 136", 136'") zu versorgen, und die Halbleiterschalter (118, 122; 218, 220, 222) der anderen Brückenhälfte mit einem Kommutierungssignal (O1, O2; 150, 150', 150'") zur Kommutierung dieser Halbleiterschalter zu versorgen;
   eine Stromversorgungseinrichtung (52) zur Stromversorgung der programmgesteuerten Rechenanordnung (80), welche Stromversorgungseinrichtung durch eine Diodenanordnung (42, 55) von der Stromversorgung des Motors (102; 202) getrennt ist, so dass bei Stromausfall die programmgesteuerte Rechenanordnung (80) unabhängig vom Motor (102; 202) deaktivierbar ist und dann keine Signale mehr für die Halbleiterschalter der Vollbrücke liefert;
   und mindestens einen Energiespeicher (170), welcher mindestens einem Halbleiterschalter (118, 122; 218, 220, 222) der anderen Brückenhälfte zugeordnet und im Betrieb des Motors (102; 202) aus dem Gleichstrom-Zwischenkreis (30, 32) aufladbar ist,
   und dessen Ladung bei Wegfall der Signale von der programmgesteuerten Rechenanordnung (80) dazu dient, den mindestens einen zugeordneten Halbleiterschalter (118, 122; 218, 220, 222) der anderen Brückenhälfte leitend zu steuern und **dadurch** die Statorwicklungsanordnung (106; 204, 206, 208) über diesen mindestens einen Halbleiterschalter (118, 122; 218, 220, 222) im Kurzschluss zu betreiben, um den permanentmagnetischen Rotor (104; 232) nach Wegfall der Signale von der programmgesteuerten Rechenanordnung (80) automatisch abzubremsen.

2. Elektromotor nach Anspruch 1, bei welchem die Vollbrücke als H-Brücke (114) ausgebildet ist.

3. Elektromotor nach Anspruch 1, bei welchem die Vollbrücke als Dreiphasen-Vollbrücke (200) ausgebildet ist.

4. Elektromotor nach einem der Ansprüche 1 bis 3, bei welchem als Energiespeicher ein erster Kondensator (170) vorgesehen ist, welcher über einen Ladekreis (174) aus dem Gleichstrom-Zwischenkreis (30, 32) aufladbar ist.

**5.** Elektromotor nach Anspruch 4, bei welchem jedem von mindestens zwei Halbleiterschaltern (118, 122; 218, 220, 222) der anderen Brückenhälfte ein Hilfskondensator (166, 166', 166", 166"') zugeordnet ist, welcher über einen Ladekreis (176, 176') mit dem ersten Kondensator (170) verbunden ist und im geladenen Zustand den zugeordneten Halbleiterschalter (118, 122; 218, 220, 222) leitend steuert.

**6.** Elektromotor nach Anspruch 5, bei welchem jedem der Hilfskondensatoren (166, 166') ein Spannungsbegrenzungsglied (168, 168') zugeordnet ist, welches die Ladespannung (u_C) des zugeordneten Hilfskondensators (166, 166') auf einen vorgegebenen Wert begrenzt.

**7.** Elektromotor nach Anspruch 5 oder 6, bei welchem dem Hilfskondensator (166, 166') ein steuerbarer Halbleiterschalter (164) zugeordnet ist, welcher im leitenden Zustand eine Entladung des Hilfskondensators (166) bewirkt und **dadurch** den zugeordneten Halbleiterschalter (118, 122) in einen nicht leitenden Zustand steuert.

**8.** Elektromotor nach einem der vorhergehenden Ansprüche, bei welchem die Summe der Kapazitätswerte (57, 60, 70, 98), welche der Stromversorgungseinrichtung (52) für die programmgesteuerte Rechenanordnung (80) zugeordnet sind, einen Wert von 0,5 μF nicht überschreitet, um bei einem Stromausfall eine rasche Abschaltung der programmgesteuerten Rechenanordnung (80) zu bewirken.

**9.** Elektromotor nach einem der vorhergehenden Ansprüche, bei welchem die Halbleiterschalter (120, 124; 210, 212, 214) der einen Brückenhälfte als Feldeffekttransistoren ausgebildet sind, welche mit einem PWM-Signal (136, 136') von der programmgesteuerten Rechenanordnung (80) direkt ansteuerbar sind.

*FIG. 1*

EP 2 149 974 A2

*FIG. 2*

EP 2 149 974 A2

FIG. 3

EP 2 149 974 A2

FIG. 4

FIG. 5

EP 2 149 974 A2